# EUROPEAN PATENT APPLICATION

(11) **EP 2 760 244 A1**
(43) Date of publication of application: **30.07.2014**
(21) Application number: 14155942.7
(22) Date of filing: 13.07.2010
(51) Int. Cl.: H04W 72/04, H04W 36/24, H04W 28/08, H04W 36/22

(54) **DYNAMIC OPTIMIZATION OF RADIO NETWORK RESOURCES BASED ON USER EQUIPMENT TYPE SMARTPHONE**

(62) Divisional of application: 10732950.0
(71) Applicant: Nokia Solutions and Networks Oy, 02610 Espoo (FI)
(72) Inventor: Juppi, Anssi Anselmi, 00700 Helsinki (FI); Cong, Xisheng, 02140 Espoo (FI)

(57) **Abstract**

A method, a radio network node, a core network node and a computer program product are provided for managing radio resources in a radio access network comprising cells and having terminals connected to it, wherein a radio resource management action is performed based on determined terminal type information, the terminal type being preferably a smartphone. The radio resource management action comprises load balancing between cells and/or network tuning.

## Description

### Field of the invention

The exemplary and non-limiting embodiments of this invention relate generally to telecommunications and more specifically to smartphones and dynamic network optimization.

### Background art

Typical wireless telecommunication networks deployed in the prior art operate in accordance with General Packet Radio Service (GPRS), Universal Mobile Telecommunications Systems (UMTS), Code-Division Multiple Access (CDMA) 2000, or Long Term Evolution (LTE) network standards. In wireless telecommunication systems, connectivity between user equipment (UE) - also called as mobile station (MS), mobile terminal (MT) or just a terminal - and the PSTN (Public Switched Telephone Network) and/or the internet is provided by the radio access network (RAN). The point at which a UE accesses the RAN is at an access node (AN). An AN can be at least one of the following: a base station (BS), a radio network controller (RNC), a base station controller (BSC), a nodeB, an evolved nodeB (eNB), depending on the radio network technology. Each AN covers a specific area defined as a "cell" within which it provides connectivity services to UEs located within the cell.

In UMTS network, as an example, each NodeB communicates with UEs through wireless radio signals and manages at least one corresponding cell or dedicated area of wireless radio coverage. Each RNC serves several NodeBs in a specific geographical area. An RNC includes at least one central processing unit (CPU), handling traffic and signalling load generated by UEs.

A smartphone is a UE, a mobile station/terminal, that lets a user make telephone calls, but also adds features that one might find on a personal digital assistant or a computer. A smartphone also offers the ability to send and receive e-mail and edit documents, for example. While there is no standard definition of the term "smartphone" across the industry, there are some features that every smartphone comprises, e.g. an operating system that allows it to run productivity applications, variable software, web access, full "qwerty" keyboard and messaging applications, just to mention some.

In contrast to ordinary cell phones, smartphones allow users to choose the applications that they want to install and use. It means that users can personalize the range of applications in their smartphones to suit their lifestyle and their job. Ordinary cell phones limit the applications that a user can utilize to the applications that come with the phone. With smartphones, users can choose their own calendar, phonebook, organizer, etc. In this regard, a smartphone can be a cell phone with PDA (personal digital assistant) features or a PDA with communication capabilities.

Because smartphones are PDA/cell phone combinations, they can receive and initiate phone calls, manage user information through their to-do list, calendar/organizer and notes, create or establish networks as well as synchronize data with the devices in the network, send and receive emails, and download and play media files.

The operating system of smartphones enables the owners to use multiple applications at the same time. A user can check the phonebook in his or her smartphone while taking a call, receive a call while watching a video without interrupting the media player application, check the calendar or to-do list while composing an email. Moreover, smartphones can be synchronized with other devices like a personal computer or laptop to keep files updated. Smartphones enable users to stay connected to the network at all times, "always on", so they can run applications remotely as well as access the internet.

However, smartphones do not have the battery muscle to remain truly "always on". In order that they can give the impression of being so, smartphones do repeatedly awaken themselves from their idle modes to ping the network for updates before putting themselves back to sleep. Many of the most popular smartphone applications, social networking and email solutions among them, require constant updates from the network. Each update can generate 21 signaling messages, which roughly equates to the network usage required by a voice call. With a smartphone typically updating every one or two minutes, the signaling traffic is comparable to 1,000 voice calls each day. Thus, radio network optimization for smartphones becomes necessary and important for operators, when more and more smartphones are coming to market.

3^{rd} generation partnership project (3GPP) has not yet addressed the problem about smartphone signaling. It means that in 3GPP networks radio network controller (RNC) is not aware of the fact whether a terminal is a smartphone or not. There is also no way for an RNC to know which terminals generate/contribute how much load for the total CPU load. That does lack of intelligence in RNC to handle smartphones or special terminals behavior in a smart way.

### Summary of the invention

It is therefore an object of this invention to overcome some of the above mentioned problems by providing a method, a radio network element, a core network element, and a computer program product as defined in the independent claims. Further embodiments of the invention are disclosed in the dependent claims.

According to a first aspect of the invention, radio resources in a radio access network comprising cells and having terminals connected to it are managed by performing a radio resource management action based on determined terminal type information, said determined terminal type information comprising information on terminals classified as smartphones, for example a smartphone type, smartphone population in a cell and a cell ID of said cell.

According to a further aspect of the invention, the radio resource management action is performed based on combination of said terminal type information and information on signaling load per cell.

According to an aspect of the invention, the radio resource management action comprises load balancing between cells, e.g. moving a selected terminal from a first cell to a second cell, allocating a selected terminal to a cell, or moving a selected terminal from a first radio access network to a second radio access network, wherein the first and second radio access networks may be of different radio access technologies. Preferably said selected terminal is a terminal classified as a smartphone. Said radio resource management action may also comprise allocating frequency resources to a cell.

According to an aspect of the invention, said terminal type information may be determined by a core network element, e.g. by a serving general packet radio service support node or a mobility management entity, based on international mobile equipment identity of a terminal. Determining said terminal type information may be done by consulting a database comprising international mobile equipment identity numbers of different terminal types. Said determined terminal type information may also be determined based on user plane or control plane traffic pattern of a terminal.

According to an aspect of the invention, said radio resource management action is performed by a radio network node, e.g. by a radio network controller or an evolved node B.

According to another aspect of the invention, there is provided a computer program product comprising code means adapted to produce the steps of the method of the invention, when loaded into the memory of a computer and executed on that computer.

As a consequence, the aspects of the invention allow dynamic optimization of radio network resources based on user equipment type.

### Brief description of the drawings

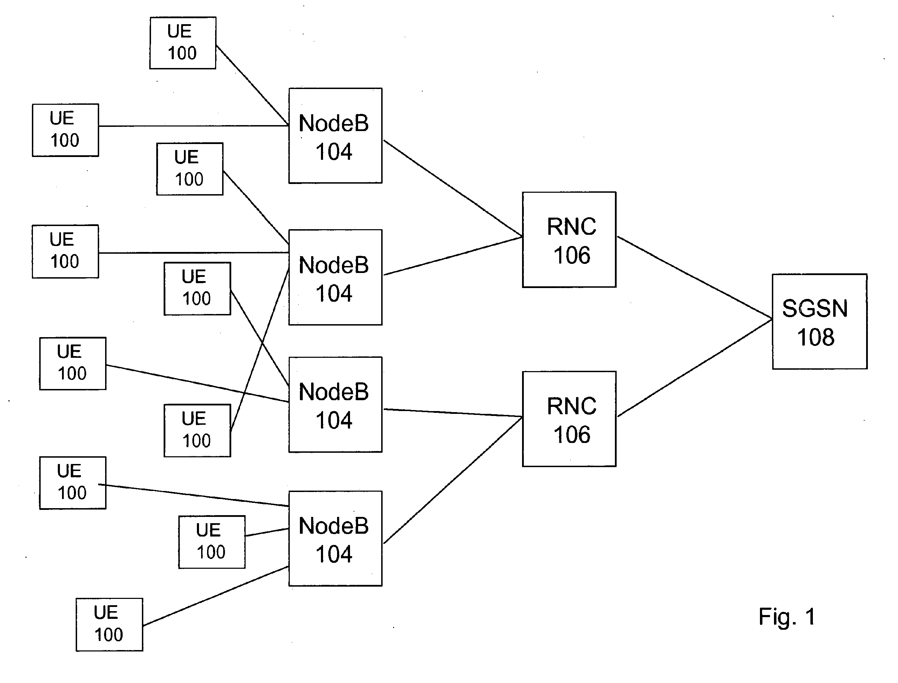

Figure 1. shows a UMTS radio network architecture of some embodiments of the invention

### Detailed description of some embodiments

The present invention is described herein with reference to particular illustrative embodiments. However, such embodiments are presented for the purposes of illustrating the present invention and do not limit the scope thereof.

The present invention is described herein by way of reference to an example implementation in a 3G UMTS network. One skilled in the art will appreciate, however, from reading the following description that the present invention is not limited in its broad applicability to such an implementation.

Referring to Fig. 1, there is illustrated the main elements of a UMTS network, necessary for understanding embodiments of the present invention. It should be noted that Fig. 1 does not represent a full implementation of a UMTS network, which implementation will be familiar to one skilled in the art. Rather Fig. 1 represents some of the main elements of such a UMTS network necessary for placing the present invention into an appropriate context.

A user equipment (UE) 100, a terminal, communicates over a radio interface with a UTRAN (UMTS radio access network). As is known in the art, the UTRAN includes a base transceiver station, also called as a NodeB 104, and a radio network controller (RNC) 106. In the UMTS network the UTRAN is connected to a serving GPRS support node (SGSN) 108 , which in turn is connected to a gateway GPRS support node (GGSN) (not shown). The GGSN is further connected to at least one external network, e.g. multimedia IP network.

In general terms, a PDP context is activated in order to establish a logical connection between a user equipment and a GGSN. The UE 100 initiates a logical connection by requesting a PDP context activation by transmitting session management messages to the SGSN 108 via the UTRAN. Responsive thereto, the SGSN 108 requests radio access bearer (RAB) establishment from the RNC 106 using the radio access network application protocol (RANAP). The SGSN 108 also requests PDP context creation with GPRS tunneling protocol (GTP) from the GGSN. This procedure is repeated for each PDP context which the UE 100 requires. In each activate PDP context request, there is included the international mobile equipment identity (IMEI) of the UE 100 sending the request. Therefore the IMEI of the connected UE 100 is always know to the serving SGSN 108. SGSN 108 also receives IMEI, temporary mobile subscriber identity (TMSI) and Cell ID in other UE related mobility and session management procedures as specified in 3GPP procedures.

In an embodiment of the invention, SGSN 108 determines by the IMEI whether a UE 100 requesting PDP context activation or a UE having already active PDP context is classified as a smartphone. A list of terminal type information may be configured to the SGSN 108 or it may be located in a central repository, a global database comprising IMEI numbers of different terminal types, including smartphones. SGSN 108 may query the IMEI information from the database of the central repository and the information may also be cached in SGSN 108 itself to allow faster operation. IMEI may also be IMEISV (international mobile station equipment identity and software version number).

In another embodiment of the invention, SGSN 108 determines whether a UE 100 is a smartphone by traffic pattern created by the UE 100. The traffic pattern in this case may be a user plane traffic pattern or a control plane traffic pattern. A smartphone usually creates a control plane traffic pattern where signaling messages are sent very often and the UE 100 turns from idle mode to active mode repeatedly. By monitoring user plane / control plane traffic patterns, SGSN 108 knows which UEs 100 can be classified as smartphones. Alternatively, RNC 106 may monitor the traffic patterns and send this information to SGSN 108.

In all above described embodiments, SGSN 108 knows which UEs 100 are smartphones and it knows in which cells those smartphones are allocated. SGSN 108 sends this information to RNC 106. SGSN 108 may create a message containing info of smartphone type, smartphone population per cell and cell ID and send the message to RNC 106. The message may be a RAB establishment request or some other message sent from SGSN 108 to RNC 106 and it may include at least one of info of smartphone type, smartphone population and cell ID. The information may also be sent in several separate messages from SGSN 108 to RNC 106. SGSN 108 may use any 3GPP specified protocol or a proprietary protocol. For example, additional info fields of 3GPP BSSGP or RANAP protocol messages may be used to deliver the information from SGSN 108 to RNC 106.

RNC 106 receives the terminal type information from SGSN. RNC 106 may use this information about smartphone population in different cells, i.e. information about smartphone type, smartphone population and cell ID, when deciding on radio resource management action or actions. The radio resource management actions include e.g. load balancing between cells and network tuning. Load balancing may include e.g. moving a UE 100 from a first cell to a second cell, allocating a UE 100 to a cell and moving a UE 100 from a first radio access network to a second radio access network. Preferably, said UEs 100 are classified as smartphones. The first and the second radio access networks may be of the same or different radio access technology. The first cell and the second cell may be managed by the same of a different RNC 106, wherein both RNCs 106 are served by the same SGSN. Load-balancing may also include SGSN 108 instructed service based handover from a first radio access technology to a second radio access technology. Network tuning may include e.g. allocating frequency resources to a cell or cells.

Load balancing may further include moving UE 100 or UEs 100 that are classified as smartphones from one cell to another less loaded cell. RNC 106 may also move UE 100 or UEs 100 that are classified as smartphones from one cell to another cell which currently serves less smartphones. In addition, RNC 106 may use the information about smartphone population in different cells when deciding new RAB creations for other UEs 100 requesting PDP context activation.

The radio resource management actions may further be based on the combination of the terminal type information with information on signaling load per cell or on received UE 100 specific cause codes related to session management and mobility management events, e.g. success rates, failure rates, failure causes, and frequency of the procedures taking place per UE 100. This information may be gathered by SGSN 108 and informed by SGSN 108 to RNC 106 or it may be gathered by RNC 106 itself. Signaling load in RNC 106 may be measured and defined as CPU load in signaling units (SU). RNC 106 may initiate radio resource management actions when signaling load in a cell exceeds a certain pre-defined threshold value. In another embodiment of the invention, SGSN 108 gathers information about smartphone population in different cells, i.e. information about smartphone type, smartphone population and cell ID as well as information on signaling load per cell and based on this information proposes specific radio resource management actions to RNC 106. These actions may include e.g. cell load balancing actions, network tuning actions or a service based handover from a first radio access technology to a second radio access technology.

In another embodiment, the SGSN 108 determines by the IMEI whether a UE 100 is classified as a smartphone and sends the information to the RNC 106, as described above. In addition, RNC 106 monitors traffic patterns created by the UEs 100. RNC 106 may use the terminal type information, i.e. information about smartphone type, smartphone population and cell ID together with traffic pattern information when deciding on radio resource management action or actions described above.

In yet another embodiment of the invention, SGSN sends the real time event on every RAB creation with IMEI/IMEISV information, TMSI and Cell ID to an external tool. Based on the received information, the external tool can make the following evaluations. It determines whether IMEI/IMEISV it sees is for a UE 100 that is smartphone, wherein a list of terminal type information may be located in a central repository, a global database comprising IMEI numbers of different terminal types, including smartphones, where the external tool may query the information, as described above. Based on Cell ID, the external tool knows the UE population and UE types in each cell in real time. Based on the available cell capacity and the available information about UE population and types, the external tool can decide to make forced handovers of the smart phones to other less loaded cells. The external tool informs the RNC 106 directly or via SGSN 108 about the UE's needed to be forced to other cells. RNC 106 can control load balancing among cells (based on radio network parameters) based on the info about active smart phone amount and load impact received from the external tool. Another option is that the external tool informs the SGSN 108 to move a UE from certain access technology (e.g. 2G, 3G or LTE) based on the capacity situation and then SGSN 108 performs a service based handover to the UE in question.

In accordance with all the above described embodiments also conventional cell selection criteria may be taken into account when RNC decides about radio resource management actions. These conventional criteria comprise e.g. quality criteria (link quality, signal to noise ratio, field strength etc.) and that a link towards one cell is better than towards other cells.

Even though the embodiments described above concentrate on using the 3G and RNC 106 and SGSN 108 as an example, the invention is as well applicable for LTE and other types of radio technology. In case of LTE, the radio network element corresponding to RNC 106 in the above embodiments is eNodeB, and the core network element corresponding to SGSN 108 in the above embodiments is mobility management entity (MME). In LTE, the UE signalling load and activity would be indentified based on the number of mobility management state changes (UE Deregistered, UE Registered Idle and UE Registered Active states) and number of bearer activations and deactivations.

In general, the various embodiments may be implemented in hardware or special purpose circuits, software, logic or any combination thereof. Some aspects may be implemented in hardware, while some other aspects may be implemented in firmware or software, which may be executed by a controller, microprocessor or other computing device. Software routines, which are also called as program products, are articles of manufacture and can be stored in any apparatus-readable data storage medium and they include program instructions to perform particular tasks. The exemplary embodiments of this invention also provide a computer program product, readable by a computer and encoding a computer program of instructions for executing a computer process described in the above embodiments.

## Claims

1. A method for managing radio resources in a radio access network comprising cells and having terminals connected to it, wherein a radio resource management action is performed based on determined terminal type information.

2. The method according to claim 1, wherein said determined terminal type information comprises information on terminals classified as smartphones.

3. The method according to claim 2, wherein said information on terminals classified as smartphones comprises at least one of a smartphone type, smartphone population in a cell and a cell ID of said cell.

4. The method according to any of claims 1 to 3, wherein said radio resource management action is performed based on combination of said terminal type information and information on signaling load per cell.

5. The method according to any of claims 1 to 4, wherein said radio resource management action comprises load balancing between cells.

6. The method according to claim 5, wherein said load balancing comprises moving a selected terminal from a first cell to a second cell.

7. The method according to claim 5, wherein said load balancing comprises allocating a selected terminal to a cell.

8. The method according to claim 5, wherein said load balancing comprises moving a selected terminal from a first radio access network to a second radio access network.

9. The method according to claim 8, wherein said first and second radio access networks are of different radio access technologies.

10. The method according to any of claims 6 to 9, wherein said selected terminal is a terminal classified as a smartphone.

11. The method according to any of claims 1 to 10, wherein said radio resource management action comprises allocating frequency resources to a cell.

12. The method according to any of claims 1 to 11, wherein said terminal type information is determined by a core network element.

13. The method according to claim 12, wherein said core network element is a serving general packet radio service support node or a mobility management entity.

14. The method according to claim 12 or 13, wherein said core network element determines said terminal type information based on international mobile equipment identity of a terminal.

15. The method according to any of claims 12 to 14, wherein said core network element determines said terminal type information by consulting a database comprising international mobile equipment identity numbers of different terminal types.

16. The method according to any of claims 1 to 13, wherein said determined terminal type information is determined based on user plane traffic pattern of a terminal.

17. The method according to any of claims 1 to 13, wherein said determined terminal type information is determined based on control plane traffic pattern of a terminal.

18. The method according to any of claims 1 to 17, wherein said method is performed by a radio network node.

19. The method according to any of claims 1 to 18, wherein said radio network node is a radio network controller or an evolved node B.
